# DEMANDE DE BREVET EUROPEEN

(11) **EP 4 657 690 A1**
(43) Date de publication de la demande: **03.12.2025**
(21) Numéro de dépôt: 25179357.6
(22) Date de dépôt: 28.05.2025
(51) Int. Cl.: H02J 1/14, H02J 7/00, H02J 7/34

(54) **DISPOSITIF DE CAPACITÉ POUR UN SYSTÈME DE GÉNÉRATION ÉLECTRIQUE D'UN AÉRONEF ET PROCÉDÉ ASSOCIÉ**

(30) Priorité: 30.05.2024 FR 2405596
(71) Demandeur: Safran Electrical & Power, 31702 Blagnac Cedex (FR)
(72) Inventeur: MAHENDHRARAJAH, Charles, 77550 MOISSY-CRAMAYEL (FR)
(74) Mandataire: Argyma

(57) **Abrégé**

Un dispositif de capacité (1) pour un système de génération électrique (S) d'un aéronef, le système de génération électrique (1) comprenant au moins une machine électrique (M) configurée pour générer un courant alternatif, au moins un convertisseur (C) pour convertir le courant alternatif de la machine électrique (M) et fournir une intensité de distribution (Idc) à une unité de distribution électrique (EDU) à alimentation continue d'un aéronef, le dispositif de capacité (1) étant configuré pour être monté en parallèle au convertisseur (C) et pour lisser l'intensité de distribution (Idc), le dispositif de capacité (1) comprenant deux bornes et une pluralité d'éléments de capacité montés en parallèle, le dispositif de capacité (1) comprenant au moins un capteur de courant (2) configuré pour mesurer un courant de distribution élémentaire (Idce) circulant dans un élément de capacité.

## Description

### DOMAINE TECHNIQUE

La présente invention concerne un dispositif de capacité pour un système de génération électrique pour un aéronef.

Le changement climatique est une préoccupation majeure pour de nombreux organes législatifs et de régulation à travers le monde. En effet, diverses restrictions sur les émissions de carbone ont été, sont ou seront adoptées par divers Etats. En particulier, une norme ambitieuse s'applique à la fois aux nouveaux types d'aéronefs mais aussi à ceux en circulation nécessitant de devoir mettre en oeuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des aéronefs. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des aéronefs.

Ces travaux de recherche et de développement soutenus portent notamment sur de nouvelles générations de moteurs d'aéronef hybrides thermiques et électriques. L'objectif de la Déposante est notamment de développer des aéronefs intégrant un système de génération électrique de forte puissance. Ceci permettrait d'augmenter la part des équipements électriques à bord afin de réduire la consommation de carburant.

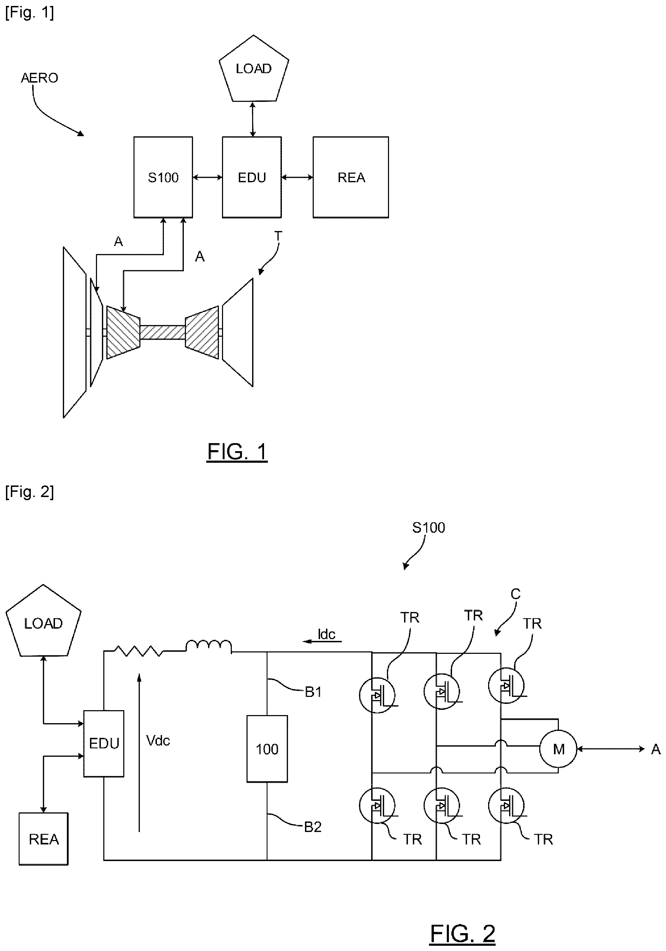

En référence à la figure 1, un aéronef AERO comprend au moins une turbomachine d'aéronef T comprenant au moins un arbre A (ici un arbre basse pression et un arbre haute pression) configuré pour être entraîné en rotation et au moins une unité de distribution électrique EDU à alimentation continue reliée à un réseau électrique de l'aéronef REA ou à des charges électriques LOAD, par exemple, des moteurs de propulsion. L'aéronef AERO comprend au moins un système de génération électrique S100 pour alimenter l'unité de distribution électrique EDU en prélevant de l'énergie mécanique sur un ou plusieurs arbres A.

En référence à la figure 2, le système de génération électrique S100 comprend au moins une machine électrique M reliée à un arbre A de la turbomachine T. Le système de génération électrique S100 comprend au moins un convertisseur C en particulier un onduleur associé à la machine électrique M. La machine électrique M génère un courant alternatif qui est ensuite redressé par le convertisseur C pour fournir une intensité de distribution Idc à l'unité de distribution électrique EDU qui possède une tension de distribution Vdc.

Il est présenté dans cet exemple une application liée à la génération électrique mais l'invention s'applique plus généralement au domaine de l'hybridation dans lequel une machine électrique M remplit, d'une part, une fonction de générateur pour prélever de la puissance mécanique sur un arbre A et, d'autre part, une fonction de moteur pour injecter de la puissance mécanique sur ledit arbre A. Pour une fonction moteur, chaque convertisseur C peut également convertir la tension de distribution Vdc pour alimenter en courant alternatif la machine électrique M afin d'injecter de la puissance.

De manière connue, un convertisseur C comporte une pluralité d'interrupteurs TR, en particulier des transistors de puissance, notamment de type MOSFET, qui permettent de modifier la puissance électrique générée et la puissance électrique prélevée par la machine électrique M sur l'arbre A. De manière connue, le convertisseur C est commandé par une information de commande, en particulier, du type MLI.

Toujours en référence à la figure 2, le système de génération électrique S100 comprend un dispositif de capacité 100, connu de la personne du métier sous la désignation anglaise de « DC Link » ou banque de capacités, qui est monté en parallèle au convertisseur C. De manière connue, le dispositif de capacité 100 permet d'absorber l'ondulation du courant de distribution Idc. Cela permet d'obtenir une unité de distribution électrique EDU ayant une tension de distribution Vdc qui soit lissée. Cela évite que la tension de distribution Vdc comporte des ondulations de fortes amplitudes.

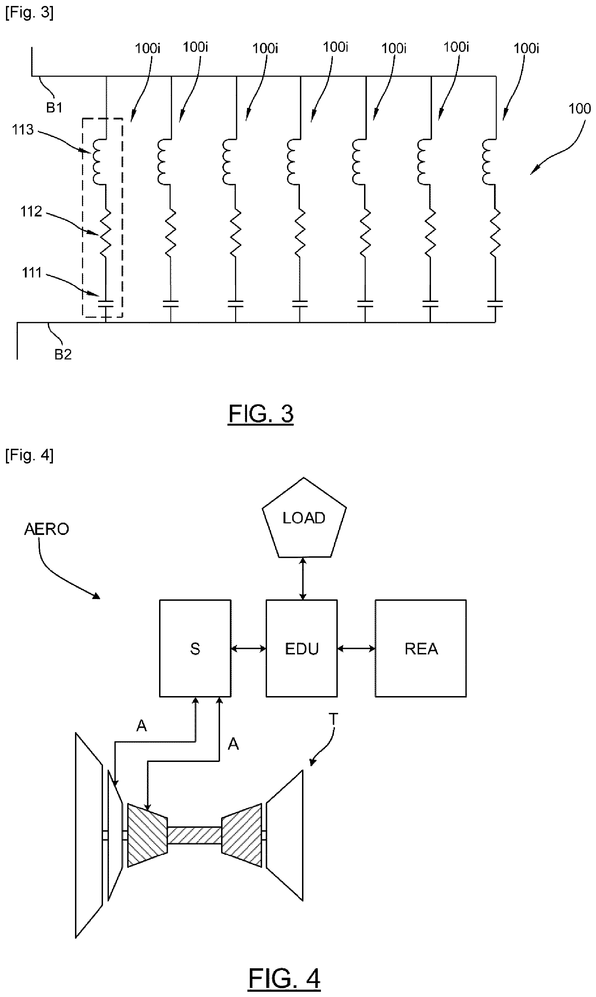

En référence à la figure 3, un dispositif de capacité 100 comprend de manière connue deux bornes B1, B2 et une pluralité d'éléments de capacité 100i, appelés aussi bobineaux, qui sont montés électriquement en parallèle. Dans cet exemple, un élément de capacité 100i comprend de manière équivalente une capacité 111, une résistance 112 et une inductance 113. En pratique, un ou plusieurs éléments de capacité 100i peuvent s'endommager au cours du temps, ce qui affecte les performances du dispositif de capacité 100.

Pour surveiller un défaut d'un ou plusieurs éléments de capacité 100i, il est connu de surveiller la tension de distribution V_{DC} et de mesurer l'amplitude de son ondulation afin de déterminer le nombre d'éléments de capacité 100i encore actifs. Si un ou plusieurs éléments de capacité 100i sont inactifs, la valeur de capacitance du dispositif de capacité 100 est réduite et l'ondulation de la tension de distribution Vdc augmente.

Pour détecter le nombre d'éléments de capacité 100i inactifs, il a été proposé de mesurer la valeur efficace (RMS) de la tension de distribution Vdc mais également la résistance électrique et la température du dispositif de capacité 100 afin de les comparer à des valeurs prédéterminées attendues. Si un ou plusieurs éléments de capacité 100i sont inactifs, la résistance et la température augmentent dans le dispositif de capacité 100. En pratique, il est difficile de mesurer de manière précise la tension de distribution Vdc, la résistance électrique ainsi que la température, ce qui rend complexe de déterminer si un ou plusieurs éléments de capacité 100i sont inactifs.

Par ailleurs, si un ou plusieurs éléments de capacité 100i sont inactifs, la température du dispositif de capacité 100 peut dépasser la température maximale autorisée pour des points de fonctionnement du système de génération électrique S100. Cela peut entrainer des défaut critiques du système de génération électrique S100. Il est ainsi souhaité de détecter de manière précoce si un ou plusieurs éléments de capacité 100i sont inactifs dans un dispositif de capacité 100.

L'invention vise ainsi à éliminer au moins certains de ces inconvénients.

### PRESENTATION DE L'INVENTION

L'invention concerne un dispositif de capacité pour un système de génération électrique d'un aéronef, le système de génération électrique comprenant au moins une machine électrique configurée pour générer un courant alternatif, au moins un convertisseur pour convertir le courant alternatif de la machine électrique et fournir une intensité de distribution à une unité de distribution électrique à alimentation continue d'un aéronef, le dispositif de capacité étant configuré pour être monté en parallèle au convertisseur et pour lisser l'intensité de distribution, le dispositif de capacité comprenant deux bornes et une pluralité d'éléments de capacité montés en parallèle.

Le dispositif de capacité est remarquable en ce qu'il comprend au moins un capteur de courant configuré pour mesurer un courant de distribution élémentaire circulant dans un élément de capacité.

De manière avantageuse, le courant de distribution élémentaire est mesuré de manière directe, ce qui permet d'obtenir une précision importante par comparaison à une mesure de tension de distribution, de résistance ou de température. Cela permet de déterminer de manière précise le nombre d'élément de capacité qui sont inactifs. On peut ainsi tester de manière efficace le dispositif de capacité et protéger le système de génération électrique.

Selon un aspect, seule une partie des éléments de capacité du dispositif de capacité sont équipés d'un capteur de courant. Ainsi, seuls certains courants de distribution élémentaires sont mesurés pour déterminer ceux qui sont inactifs. Selon un aspect, moins de 50% des éléments de capacité du dispositif de capacité sont équipés d'un capteur de courant. Cela permet de réduire les coûts tout en testant de manière pertinente le dispositif de capacité. De manière préférée, un unique élément de capacité du dispositif de capacité est équipé d'un capteur de courant. Cela permet d'obtenir un test fiable à moindres coûts tout en nécessitant des modifications réduites.

Selon un aspect, le capteur de courant est du type Rogowski. Un tel capteur de courant possède une grande précision. **En** outre, un tel capteur de courant permet de mesurer précisément des variations de courant et est donc adapté au besoin. Un tel capteur de courant possède en outre une bande passante importante et ne génère pas de pertes par comparaison à un shunt. Un tel capteur de courant présente en outre l'avantage de ne pas modifier de manière importante le design mécatronique. Cela évite de déséquilibrer les courants dans le dispositif de capacité, ce qui permet de conserver des performances optimales. En outre, un tel capteur de courant possède un impact volume/masse très réduit.

Selon un aspect, le capteur de courant est intégré dans le dispositif de capacité, en particulier, dans une résine. Cela permet d'obtenir un dispositif de capacité robuste dans le temps, en particulier, vis-à-vis des contraintes du milieu aéronautique.

Il est également présenté un système de génération électrique d'un aéronef, l'aéronef comprenant au moins une turbomachine d'aéronef comprenant au moins un arbre configuré pour être entraîné en rotation, le système de génération électrique comprenant :
- au moins une machine électrique configurée pour générer un courant alternatif en prélevant de l'énergie mécanique sur l'arbre,
- au moins un convertisseur pour convertir le courant alternatif de la machine électrique et fournir une intensité de distribution à une unité de distribution électrique à alimentation continue d'un aéronef,
- au moins un dispositif de capacité, tel que présenté précédemment, monté en parallèle au convertisseur pour lisser l'intensité de distribution.

Il est également présenté un aéronef comprenant au moins une turbomachine d'aéronef comprenant au moins un arbre configuré pour être entraîné en rotation, au moins une unité de distribution électrique à alimentation continue et au moins un système de génération électrique, tel que présenté précédemment, pour alimenter l'unité de distribution électrique en prélevant de l'énergie mécanique sur l'arbre.

Il est également présenté un procédé de contrôle d'un dispositif de capacité d'un système de génération électrique, tel que présenté précédemment, le procédé comprenant des étapes consistant à :
- Fournir un courant de distribution test au dispositif de capacité, le courant de distribution se répartissant dans le ou les éléments de capacité actifs montés en parallèle,
- Mesurer un courant de distribution élémentaire circulant dans l'élément de capacité associé au capteur de courant et
- Emettre une information de défaut si le courant de distribution élémentaire est supérieur à un seuil de courant déterminé.

Ainsi, on peut détecter de manière pratique si un ou plusieurs éléments de capacité sont inactifs afin de protéger le système de génération. Toute augmentation du courant de distribution élémentaire liée à la perte d'un élément de capacité peut être déterminée de manière précise.

Selon un aspect, le dispositif de capacité étant configuré pour recevoir un courant de distribution maximal Idc_max, le courant de distribution test Idc_test est défini selon la formule suivante : 0,9*ldc_max ≤Idc_test ≤ Idc_max. Selon un aspect, le courant de distribution test est égal au courant de distribution maximal. Un courant de distribution test de forte valeur permet de faciliter la détection par un capteur de courant. Toute augmentation liée à un défaut peut être aisément détectée avec un capteur de courant.

Selon un aspect, le dispositif de capacité étant configuré pour recevoir un courant de distribution maximal Idc_max, le dispositif de capacité ayant un nombre N d'éléments de capacité Idc_max, le seuil de courant déterminé est défini par la formule suivant : S1= Idc_max/N. Le seuil de courant est ainsi déterminé par rapport à un fonctionnement nominal lorsque tous les éléments de capacité sont actifs.

Selon un aspect, un courant comportant une composante directe et une composante quadrature selon la transformée de Park, le courant de distribution de test comporte une composante quadrature de valeur nulle. Cela permet d'éviter tout injection de couple dans la machine électrique lors du test tout en ayant une valeur de courant de distribution élevée pour faciliter sa détection.

Selon un aspect, le procédé de contrôle comprend des étapes consistant à :
- Déterminer le nombre d'éléments de capacité actifs du dispositif de capacité à partir du courant de distribution élémentaire,
- Déterminer un courant de distribution maximal de sécurité à partir du nombre d'éléments de capacité actifs et
- Commander le système de génération électrique en limitant le courant de distribution au courant de distribution maximal de sécurité.

De manière avantageuse, on commande le système de génération électrique selon un mode dégradé pour éviter tout point de fonctionnement qui serait susceptible d'endommager le dispositif de capacité. La sécurité et la durée de vie sont améliorées.

Selon un aspect, le procédé comprend une étape consistant à déterminer le nombre d'éléments de capacité actifs du dispositif de capacité à partir du courant de distribution élémentaire et d'une base de données prédéterminée associant un nombre d'éléments de capacité actifs à une valeur de courant de distribution élémentaire. Cela permet une détermination rapide et pratique.

Selon un aspect, le procédé comprend une étape consistant à émettre une information de défaut de l'élément de capacité associé au capteur de courant si le courant de distribution élémentaire est nul. Le défaut est localisé, ce qui permet une maintenance pratique.

L'invention concerne également un produit de type programme d'ordinateur, comprenant au moins une séquence d'instructions stockée et lisible par un processeur et qui, une fois lue par ce processeur, provoque la réalisation des étapes du procédé tel que présenté précédemment. De préférence, ces étapes sont mises en oeuvre par le calculateur.

L'invention concerne en outre un support lisible par un calculateur comportant le produit de type programme d'ordinateur tel que présenté précédemment.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'un aéronef avec un système de génération électrique selon l'art antérieur.
La figure 2 est une représentation schématique d'un système de génération électrique selon l'art antérieur.
La figure 3 est une représentation schématique d'un dispositif de capacité selon l'art antérieur.
La figure 4 est une représentation schématique d'un aéronef avec un système de génération électrique selon l'invention.
La figure 5 est une représentation schématique d'un système de génération électrique selon l'invention.
La figure 6 est une représentation schématique d'un dispositif de capacité selon l'invention avec un capteur de courant.
La figure 7 est une autre représentation schématique d'un dispositif de capacité avec un capteur de courant.
La figure 8 est une représentation schématique d'un exemple de mise en oeuvre d'un procédé de contrôle.
La figure 9 est une représentation schématique de l'évolution du courant de distribution élémentaire en fonction du nombre d'éléments de capacité inactifs.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la figure 4, il est représenté un aéronef AERO qui comprend au moins une turbomachine d'aéronef T comprenant au moins un arbre A (ici un arbre basse pression et un arbre haute pression) configuré pour être entraîné en rotation et au moins une unité de distribution électrique EDU à alimentation continue reliée à un réseau électrique de l'aéronef REA ou à des charges électriques LOAD, par exemple, des moteurs de propulsion. L'aéronef AERO comprend au moins un système de génération électrique S pour alimenter l'unité de distribution électrique EDU en prélevant de l'énergie mécanique sur un ou plusieurs arbres A.

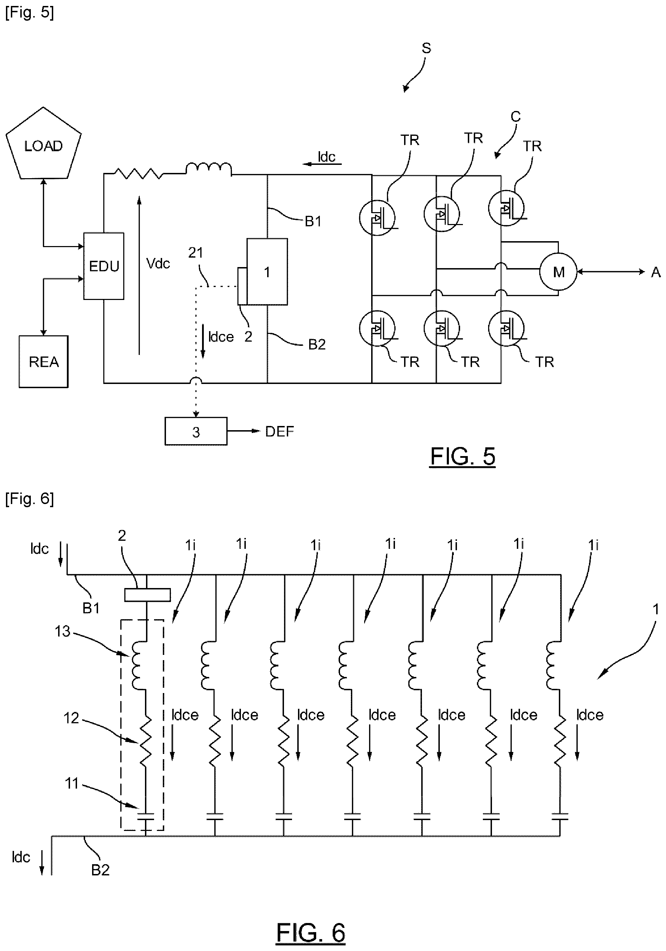

En référence à la figure 5, le système de génération électrique S comprend au moins une machine électrique M configurée pour générer un courant alternatif en prélevant de l'énergie mécanique sur l'arbre A, au moins un convertisseur C pour convertir le courant alternatif de la machine électrique M et fournir une intensité de distribution Idc à une unité de distribution électrique EDU à alimentation continue d'un aéronef, l'unité de distribution électrique EDU possédant une tension de distribution Vdc.

Il est présenté dans cet exemple une application liée à la génération électrique mais l'invention s'applique plus généralement au domaine de l'hybridation dans lequel une machine électrique M remplit, d'une part, une fonction de générateur pour prélever de la puissance mécanique sur un arbre A et, d'autre part, une fonction de moteur pour injecter de la puissance mécanique sur ledit arbre A. Pour une fonction moteur, chaque convertisseur C peut également convertir la tension de distribution Vdc pour alimenter en courant alternatif la machine électrique M afin d'injecter de la puissance.

De manière connue, un convertisseur C comporte une pluralité d'interrupteurs TR, en particulier des transistors de puissance, notamment de type MOSFET, qui permettent de modifier la puissance électrique générée et la puissance électrique prélevée par la machine électrique M sur l'arbre A. De manière connue, le convertisseur C est commandé par une information de commande, en particulier, du type MLI.

Le système de génération électrique S comprend au moins un dispositif de capacité 1 monté en parallèle au convertisseur C pour lisser la tension de distribution Vdc. Le dispositif de capacité 1 est monté entre le convertisseur C et l'unité de distribution électrique EDU comme illustré à la figure 5.

En référence à la figure 6, le dispositif de capacité 1, connu de la personne du métier sous la désignation anglaise de « DC Link » ou banque de capacités, comprend deux bornes B1, B2 et une pluralité d'éléments de capacité 1i, appelés aussi bobineaux, montés en parallèle. Dans cet exemple, un élément de capacité 1i comprend de manière équivalente une capacité 11, une résistance 12 et une inductance 13. Dans cet exemple, le dispositif de capacité 1 possède un nombre N d'éléments de capacité 1i dont un nombre N1 qui sont actifs et un nombre N2 qui sont inactifs (N=N1+N2).

Le dispositif de capacité 1 est remarquable en ce qu'il comprend au moins un capteur de courant 2 configuré pour mesurer un courant de distribution élémentaire Idce circulant dans un élément de capacité 1i. De manière préférée, le dispositif de capacité 1 comporte un unique capteur de courant 2, cela permet de réduire le coût et la complexité. Il va néanmoins de soi que plusieurs éléments de capacité 1i pourraient être équipés d'un capteur de courant 2.

De manière préférée, le capteur de courant 2 est du type Rogowski. En particulier, le capteur de courant 2 comporte un circuit imprimé comprenant une sonde Rogowski, par exemple, sous la référence commerciale TIDA-01063.

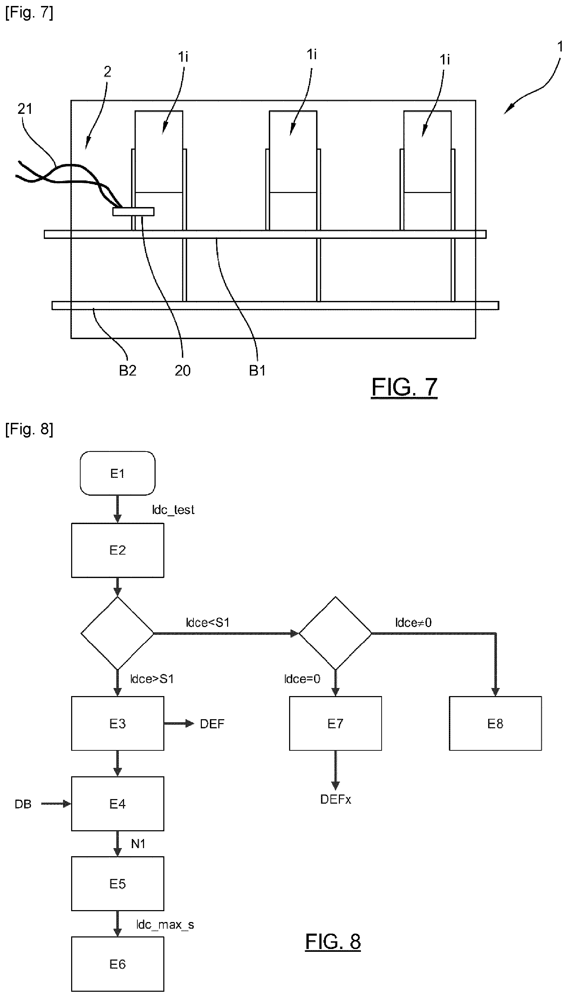

Selon un aspect préféré, en référence à la figure 7, le capteur de courant 2 est intégré dans le dispositif de capacité 1. Dans cet exemple, le capteur de courant 2 comporte un organe fonctionnel 20 monté sur un élément de capacité 1i et au moins un câble de communication 21 configuré pour être relié à un calculateur 3 (Figure 5) afin de mesurer le courant de distribution élémentaire Idce circulant dans ledit élément de capacité 1i et émettre des informations de défaut DEF ou une commande du système de génération électrique S, en particulier une commande MLI pour commander le convertisseur C et adapter l'intensité de distribution Idc. L'organe fonctionnel 20 se présente sous la forme d'une carte de circuit imprimée comprenant une pluralité d'inductances pour mesurer le courant tout en limitant les pertes. Cela permet de manière avantageuse de permettre une protection dans une résine.

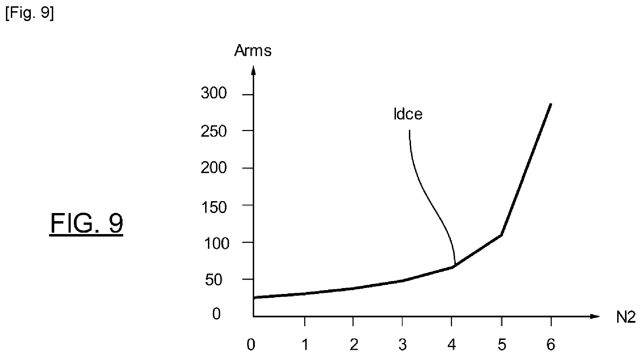

En fonctionnement, comme illustré à la figure 6, le courant de distribution Idc se divise de manière égale entre les N1 éléments de capacité 1i qui sont actifs. Ainsi, chaque élément de capacité 1i actif est traversé par le même courant de distribution élémentaire Idce. Plus le nombre N2 d'éléments de capacité 1i inactifs est important, plus le courant élémentaire Idce est élevé. La figure 9 illustre l'évolution du courant de distribution élémentaire Idce en fonction du nombre N2 d'éléments de capacité 1i inactifs.

En pratique, la perte d'un unique élément de capacité 1i induit une augmentation faible du courant de distribution élémentaire Idce sur les autres éléments de capacité 1i, par exemple, de l'ordre de 4 mArms. Un capteur de courant 2 du type Rogowski possède la précision suffisante pour détecter la perte d'un unique élément de capacité 1i.

Il va être présenté un procédé de contrôle d'un dispositif de capacité 1 d'un système de génération électrique S tel que présenté précédemment. Un tel procédé de contrôle peut par exemple être mis en œuvre lors du démarrage du système de génération électrique S ou de manière périodique.

Dans cet exemple de mise en œuvre, le dispositif de capacité 1 est configuré pour recevoir un courant de distribution maximal Idc_max. De manière préférée, le courant de distribution maximal Idc_max est défini pour le point de fonctionnement du système de génération électrique S imposant le plus fort courant de distribution Idc. Par exemple, il est déterminé par les limites du convertisseur C.

En référence à la figure 8, le procédé comprend une étape consistant à fournir E1 un courant de distribution test Idc_test au dispositif de capacité 1, le courant de distribution Idc se répartissant dans le ou les éléments de capacité 1i actifs montés en parallèle. De manière préférée, le courant de distribution Idc est fourni par le convertisseur C.

De préférence, le courant de distribution test Idc_test possède une valeur élevée de manière à permettre de générer une augmentation de l'intensité de distribution élémentaire Idce qui soit aisément détectable. Selon un aspect, le courant de distribution test Idc_test est défini selon la formule suivante : 0,9*ldc_max ≤Idc_test ≤ Idc_max. De manière préférée, le courant de distribution test Idc_est est égal au courant de distribution maximal Idc_max.

De manière connue, selon la transformée de Park, un courant comporte une composante directe et une composante quadrature. Selon un aspect, le courant de distribution de test Idc_test comporte une composante quadrature de valeur nulle. Cela permet de manière avantageuse de ne pas générer de couple, ce qui améliore la sécurité tout en obtenant un courant de distribution Ide de forte valeur.

Toujours en référence à la figure 8, le procédé de contrôle comprend une étape consistant à mesurer E2 un courant de distribution élémentaire Idce circulant dans l'élément de capacité 1i associé au capteur de courant 2.

Le procédé comprend en outre une étape consistant à émettre E3 une information de défaut DEF si le courant de distribution élémentaire Idce est supérieur à un seuil de courant déterminé S1. L'information de défaut DEF peut se présenter sous diverses formes, par exemple, un message d'alerte, un message informatique, une alarme visuelle ou sonore. Selon un aspect préféré, comme présenté par la suite, une limitation de puissance est commandée suite à l'émission de l'information de défaut DEF.

Selon un aspect, le seuil de courant déterminé S1 est défini comme le courant de distribution élémentaire maximal Idc_max lorsque tous les éléments de capacité 1i sont actifs. De préférence, le seuil de courant déterminé S1 est défini par la formule suivante : S1= Idc_max/N. Cela permet de manière avantageuse de détecter un élément de capacité 1i inactif.

Le procédé comprend une étape consistant à déterminer E4 le nombre N1 d'éléments de capacité 1i qui sont actifs du dispositif de capacité 1 à partir du courant de distribution élémentaire Idce. En pratique, le nombre N1 est déterminé à partir du courant de distribution élémentaire Idce et d'une base de données DB prédéterminée associant un nombre N1 (N1=N-N2) d'éléments de capacité 1i actifs à une valeur de courant de distribution élémentaire Idce. La base de données DB peut se présenter sous la forme d'une courbe comme illustré à la figure 9.

Le procédé comprend une étape consistant à déterminer E5 un courant de distribution maximal de sécurité Idc_max_s à partir du nombre N1. En particulier, le courant de distribution maximal de sécurité Idc_max_s peut être défini selon la formule suivante : 0,9*N1*S1 ≤Idc_max_s ≤ N1*S1. Cela permet de garantir que chaque élément de capacité actif n'est pas soumis à un courant de distribution élémentaire Idce qui soit trop important.

Le procédé comprend une étape consistant à commander E6 le système de génération électrique S en limitant le courant de distribution Idc au courant de distribution maximal de sécurité Idc_max_s. A titre d'exemple, le calculateur 3 peut émettre une commande au convertisseur C pour lui imposer de ne pas dépasser le courant de distribution maximal de sécurité Idc_max_s, en particulier, en modifiant la commande MLI des transistors TR. Ainsi, du fait de la limitation, des points de fonctionnement du système de génération S ne sont plus atteignables afin de protéger le dispositif de capacité 1 mais également le système de génération S. La fiabilité et la sécurité de fonctionnement sont alors conservés malgré un fonctionnement dégradé.

Le procédé comprend une étape consistant à émettre E7 une information de défaut localisé DEFx de l'élément de capacité 1i associé au capteur de courant 2 si le courant de distribution élémentaire Idce est nul. S'il n'est pas nul, le procédé comprend une étape consistant à émettre E8 une information d'absence de défaut OK afin de confirmer une absence de défaut du dispositif de capacité 1, c'est-à-dire, que tous les éléments de capacité 1i sont actifs (N1=N).

Grâce au procédé de contrôle, un système de génération S peut être testé de manière pratique sans injection d'un courant de distribution ayant une composante quadrature, ce qui assure la sécurité. En cas de détection de défaut, la gravité du défaut est avantageusement mesurée et est prise en compte lors de l'utilisation du système de génération S en interdisant certains points de fonctionnement. Un fonctionnement dégradé et sécurisé est ainsi possible pour alimenter l'unité de distribution électrique EDU. En cas de détection d'un défaut, une maintenance préventive peut être réalisée. Le système de génération S peut ainsi être utilisé en toute sécurité et sa durée de vies est allongée.

## Revendications

1. Dispositif de capacité (1) pour un système de génération électrique (S) d'un aéronef, le système de génération électrique (1) comprenant au moins une machine électrique (M) configurée pour générer un courant alternatif, au moins un convertisseur (C) pour convertir le courant alternatif de la machine électrique (M) et fournir une intensité de distribution (Idc) à une unité de distribution électrique (EDU) à alimentation continue d'un aéronef, le dispositif de capacité (1) étant configuré pour être monté en parallèle au convertisseur (C) et pour lisser l'intensité de distribution (Idc), le dispositif de capacité (1) comprenant deux bornes (B1, B2) et une pluralité d'éléments de capacité (1i) montés en parallèle, dispositif de capacité (1) **caractérisé en ce qu'**il comprend au moins un capteur de courant (2) configuré pour mesurer un courant de distribution élémentaire (Idce) circulant dans un élément de capacité (1i).

2. Dispositif de capacité selon la revendication 1 dans lequel le capteur de courant (2) est du type Rogowski.

3. Dispositif de capacité selon l'une des revendications 1 à 2, dans lequel le capteur de courant (2) est intégré dans le dispositif de capacité (1), en particulier, dans une résine.

4. Système de génération électrique (S) d'un aéronef, l'aéronef comprenant au moins une turbomachine d'aéronef (T) comprenant au moins un arbre (A) configuré pour être entraîné en rotation, le système de génération électrique (S) comprenant :
- au moins une machine électrique (M) configurée pour générer un courant alternatif en prélevant de l'énergie mécanique sur l'arbre (A),
- au moins un convertisseur (C) pour convertir le courant alternatif de la machine électrique (M) et fournir une intensité de distribution (Idc) à une unité de distribution électrique (EDU) à alimentation continue d'un aéronef,
- au moins un dispositif de capacité (1) selon l'une des revendications 1 à 3 monté en parallèle au convertisseur (C) pour lisser l'intensité de distribution (Vdc).

5. Aéronef comprenant au moins une turbomachine d'aéronef (T) comprenant au moins un arbre (A) configuré pour être entraîné en rotation, au moins une unité de distribution électrique (EDU) à alimentation continue et au moins un système de génération électrique (S) selon la revendication 4 pour alimenter l'unité de distribution électrique (EDU) en prélevant de l'énergie mécanique sur l'arbre (A).

6. Procédé de contrôle d'un dispositif de capacité (1) d'un système de génération électrique (S) selon la revendication 4, le procédé comprenant des étapes consistant à :
- Fournir (E1) un courant de distribution test (Idc_test) au dispositif de capacité (1), le courant de distribution (Idc) se répartissant dans le ou les éléments de capacité (1i) actifs montés en parallèle,
- Mesurer (E2) un courant de distribution élémentaire (Idce) circulant dans l'élément de capacité (1i) associé au capteur de courant (2) et
- Emettre (E3) une information de défaut (DEF) si le courant de distribution élémentaire (Idce) est supérieur à un seuil de courant déterminé (S1).

7. Procédé de contrôle selon la revendication 6, dans lequel, le dispositif de capacité (1) étant configuré pour recevoir un courant de distribution maximal (Idc_max), le courant de distribution test (Idc_est) est défini selon la formule suivante : 0,9*ldc_max ≤Idc_test ≤ Idc_max.

8. Procédé de contrôle selon l'une des revendications 6 à 7, dans lequel, le dispositif de capacité (1) étant configuré pour recevoir un courant de distribution maximal (Idc_max), le dispositif de capacité (1) ayant un nombre (N) d'éléments de capacité (1i), le seuil de courant déterminé (S1) est défini par la formule suivant : S1= Idc_max/N.

9. Procédé de contrôle selon l'une des revendications 6 à 8, dans lequel, un courant comportant une composante directe et une composante quadrature selon la transformée de Park, le courant de distribution de test (Idc_test) comporte une composante quadrature de valeur nulle.

10. Procédé de contrôle selon l'une des revendications 6 à 9, comprenant des étapes consistant à :
- Déterminer (E4) le nombre (N1) d'éléments de capacité (1i) actifs du dispositif de capacité (1) à partir du courant de distribution élémentaire (Idce),
- Déterminer (E5) un courant de distribution maximal de sécurité (Idc_max_s) à partir du nombre (N1) d'éléments de capacité (1i) actifs et
- Commander (E6) le système de génération électrique (S) en limitant le courant de distribution (Idc) au courant de distribution maximal de sécurité (Idc_max_s).

11. Procédé de contrôle selon l'une des revendications 6 à 10, comprenant une étape consistant à émettre (E7) une information de défaut (DEFx) de l'élément de capacité (1i) associé au capteur de courant (2) si le courant de distribution élémentaire (Idce) est nul.
